(19) Europäisches Patentamt
European Patent Office
Office européen des brevets

(11) **EP 2 757 768 A1**

(12) **EUROPEAN PATENT APPLICATION**
published in accordance with Art. 153(4) EPC

(43) Date of publication:
**23.07.2014 Bulletin 2014/30**

(51) Int Cl.:
*H04N 5/225* (2006.01)     *B60R 1/00* (2006.01)
*B60R 11/04* (2006.01)     *H04N 7/18* (2006.01)
*H04N 17/00* (2006.01)

(21) Application number: **12832652.7**

(22) Date of filing: **13.09.2012**

(86) International application number:
**PCT/JP2012/005853**

(87) International publication number:
**WO 2013/038681 (21.03.2013 Gazette 2013/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2011   JP 2011200005
24.02.2012   JP 2012039417**

(71) Applicant: **Kyocera Corporation
Kyoto-shi
Kyoto 612-8501 (JP)**

(72) Inventors:
• **MAEKAWA, Takashi
Kyoto-shi,
Kyoto 612-8501 (JP)**

• **YANAGISAWA, Haruo
Kyoto-shi,
Kyoto 612-8501 (JP)**
• **SAWADA, Ryuuichi
Kyoto-shi,
Kyoto 612-8501 (JP)**

(74) Representative: **Schwabe - Sandmair - Marx
Patentanwälte
Stuntzstraße 16
81677 München (DE)**

(54)   **CAMERA CALIBRATION DEVICE, CAMERA, AND CAMERA CALIBRATION METHOD**

(57)   An object of the present invention is to provide a camera calibration device, enabling a single operation of camera calibration by using a calibration mark, a camera and a camera calibration method. A camera calibration device (100) includes an imaging unit (1) configured to take an image of a calibration mark (8), an instruction means (5) configured to instruct on a display position of a calibration marker (14) to be superimposed on the image, an image signal processing means (3) configured to process the image such that the calibration marker is superimposed at the display position according to the instruction, and a calculation unit (4) configured to calculate parameters for calibrating deviation of a camera mounting angle based on the display position of the calibration marker (14) displayed overlapping two points of the calibration mark (8).

FIG. 1

**Description**

Cross Reference to Related Application

This application claims priority to and the benefit of Japanese Patent Application No. 2011-200005 filed on September 13,2011 and Japanese Patent Application No. 2012-039417 filed on February 24, 2012, the entire contents of which are incorporated herein by reference.

Field of the Invention

The present invention relates to a camera calibration device, a camera and a camera calibration method for calibrating a camera mounting angle on a vehicle by calculating the camera mounting angle by taking an image of a calibration mark.

Background of the Invention

In recent years, various vehicles including cars often have onboard cameras for assisting drive by supplementing drivers' views. An image taken by the onboard camera is displayed in, for example, a display such as a navigation device to allow a driver to view. As necessary, graphic data indicating a predicted track may be superimposed on the displayed image. When a rear-view camera is mounted for supplementing a rear view of the vehicle, for example, the graphic data indicating the predicted track based on a steering angle when the vehicle is moving backward may be superimposed on the image in real time.

Such an onboard camera is mounted on the vehicle by workers and, generally, a mounting accuracy is substantially low. A display position of the graphic data superimposed on the image taken by the onboard camera is susceptible to the mounting accuracy of the onboard camera. Therefore, when the mounting accuracy is very low, the display position of the graphic data is greatly displaced from an original position, providing the driver with incorrect informafion. In using such an onboard camera, accordingly, the mounting angle of the onboard camera is calibrated by calculating the mounting angle by taking an image of the calibration mark provided outside the vehicle and evaluating a display position of the calibration mark in the image.

Generally, a three-dimensional object has been used as the calibration mark for calibration of the onboard camera. However, in consideration of simplicity and productivity for the workers and worksites for performing calibration, Patent Document 1 discloses an example of a calibration method using, instead of the three-dimensional object, a two-dimensional mark placed on a plane as the calibration mark. According to Patent Document 1, when an image of the two-dimensional mark is taken by the onboard camera, an operator superimposes a window, whose display position is movable, on the image and adjusts the display position of the window to accommodate the calibration object therein. Thereby, parameters necessary for calibration (a roll angle, a pan angle and a tilt angle of the onboard camera) are calculated. According to Patent Document 1, the display position of the window is controlled through a user interface.

Related Art Document

Patent Document

Patent Document 1: Japanese Patent Laid-OpenNo. 2001-245326

Summary of the Invention

According to Patent Document 1 described above, since a display position of a window 23 is adjusted by rotating the window 23 clockwise and counterclockwise as well as by moving in horizontal and vertical directions, the user interface for instructing on the display position of the window 23 is intricately configured and imposes a work load on the operator. Also, it is difficult for the operator to accurately place a calibration mark 22 inside the window 23 in one adjustment operation and the operator needs to repeat adjustment several times. Therefore, there is a problem that the operator needs to be skilled in adjustment and also to bear a heavy work load.

Accordingly, it is an object of the present invention, in consideration of such a problem, to provide a camera calibration device, a camera and a camera calibration method enabling a simple operation of camera calibration by using the calibration mark.

In order to solve the above problem, a camera calibration device according to one embodiment for calibrating a camera mounting angle on a vehicle by calculating the camera mounting angle by taking an image of a calibration mark, includes: an imaging unit configured to take the image including the calibration mark having two separate points on a plane; an image superimposing unit configured to process an image signal such that a calibration marker is superimposed on the image; an instruction unit configured to instruct on a position to superimpose the calibration marker in the image; and a calculation unit configured to calculate parameters for calibrating deviation of the camera mounting angle based on a display position of the calibration marker when the calibration marker is superimposed overlapping the two points of the calibration mark.

The camera calibration device according to the embodiment enables, without a complex operation such as repetitive fine adjustments, to easily adjust the display position of the calibration marker so as to overlap the two points of the calibration mark and to calculate the camera mounting angle, for camera calibration.

A rear camera employs a wide angle lens to obtain a wide view of an image taking area. Such a wide angle lens has a significant distortion and may cause deformation of a subject image especially near a periphery thereof. In such a case, with the technique of Patent Document 1 described above, an image of the calibration object 22 in the image taken by the camera is significantly deformed and possibly protrude from the window 23.

According to the embodiment, also, a calculation amount for displaying the calibration marker in a display panel in real time during calibration may be reduced. According to the embodiment, that is, the calibration marker is linearly shifted in the vertical and horizontal directions on the image in calibration and calibration data are calculated collectively after such positional adjustment.

Preferably, the calibration marker is shifted in the vertical and horizontal directions.

Preferably, two calibration markers are displayed on the image so as to correspond to two separate points of the calibration mark and display positions of the calibration markers may be separately controlled by an instruction unit.

Preferably, the calibration marker is formed of two lines orthogonal to each other and an intersection of the two lines indicates the display position of the calibration marker. Thereby, a size of the calibration marker is increased, allowing the operator to easily recognize the calibration marker in the display panel such as a display and improving operability.

The calibration marker may be in a shape surrounding a predetermined area, and the calculation unit may calculate the camera mounting angle based on the display position of the calibration marker when the calibration marker is displayed overlapping the two points of the calibration mark.

Preferably, the calibration mark is formed of a line connecting the two separate points.

The image superimposing unit may highlight the calibration marker being shifted.

The image taken by the camera is output, after the calculation unit calculates parameters, being offset by an amount corresponding to the parameters.

Alternatively, the image taken by the camera is output, after the calculation unit calculates the parameters, being offset by the amount corresponding to the parameters, or the image superimposing unit, when superimposing a predetermined image on the image taken by the camera, sets an offset for a superimposing position by the amount corresponding to the parameters.

The camera calibration device may further include a display for displaying an image in which the calibration marker is superimposed on the image including the calibration mark. Further, the camera calibration device may be constituted, without the imaging unit, by using: an image superimposing unit configured to process an image signal such that the calibration marker is superimposed on the image including the calibration mark having two separate points on a plane; an instruction unit configured to instruct on a display position of the calibration marker superimposed on the image; and a calculation unit configured to calculate the camera mounting angle based on the display position of the calibration marker when the calibration marker is superimposed on the image overlapping the two points of the calibration mark.

In order to solve the above problem, a camera calibration method according to one embodiment for calibrating a camera mounting angle on a vehicle by calculating the mounting angle by taking an image of a calibration mark, includes: a step to take an image including the calibration mark having two separate points on a plane; a step to superimpose a calibration marker on the image; a step to instruct on a display position of the calibration marker superimposed on the image; and a step to calculate the camera mounting angle based on the display position of the calibration marker superimposed overlapping the two points of the calibration mark.

The camera calibration method according to the embodiments may be appropriately substantialized by the calibration device described above (included in each embodiment).

Also, a camera according to one embodiment, capable of calibrating a camera mounting angle on a vehicle by calculating the camera mounting angle by taking an image of a calibration mark, includes: an imaging unit configured to take an image including the calibration mark having two separate points on a plane; an image superimposing unit configured to process an image signal such that a calibration marker is superimposed on the image; an instruction reception unit configured to receive an instruction on a display position of the calibration marker superimposed on the image; and a calculation unit configured to calculate the camera mounting angle based on the display position of the calibration marker superimposed overlapping the two points of the calibration mark.

The camera according to the embodiments may be appropriately substantialized by having the calibration device (included in each embodiment) described above.

Brief Description of the Drawings

FIG. 1 is a block diagram illustrating an entire configuration of a camera calibration device according to one embodiment of the present invention.

FIG. 2 is a diagram illustrating examples of operation units of an instruction unit serving as a user interface.

FIGS. 3 (a) and (b) are diagrams illustrating variations of a form of a calibration mark imaged by an imaging unit in calibration.

FIG. 4 is a flowchart illustrating control by a CPU in steps.

FIG 5 is a flowchart illustrating a shift operation of a calibration marker according to the present invention.

FIGS. 6(a)-(e) are diagrams illustrating an example of a shift of the calibration marker by the camera calibration device according to one embodiment of the present invention.

FIG. 7 is a diagram illustrating a positional relationship between the imaging unit provided to a vehicle and the calibration mark.

FIGS. 8(a)-(c) are diagrams illustrating examples of rotation in a world coordinate system.

FIGS. 9(a)-(b) are diagrams illustrating examples of the calibration marker.

FIG 10 is a diagram illustrating a vehicle having a camera mounted thereon.

Detailed Description of Embodiments of the Invention

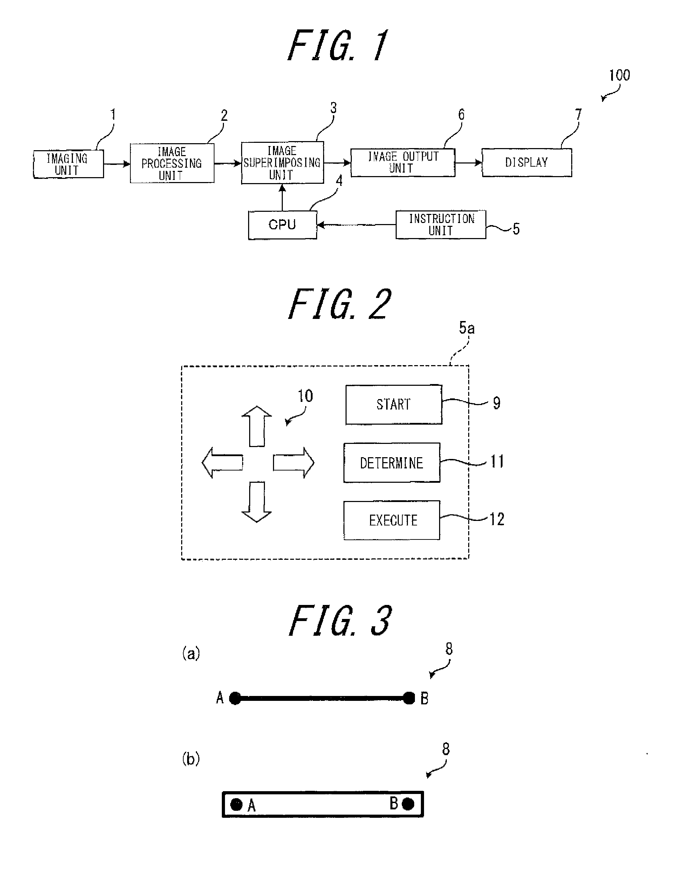

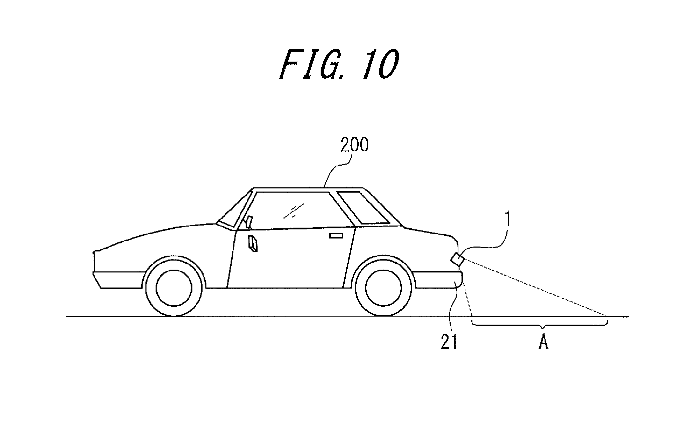

FIG. 1 is a block diagram illustrating an entire configuration of a camera calibration device 100 according to one embodiment. An imaging unit 1 serving as a camera (an onboard camera) mounted on a vehicle (for example, a car) has an image sensor such as CMOS or CCD for converting the light of a subject entering through a lens (not illustrated) into an electric signal. FIG. 10 is a diagram illustrating the vehicle having the imaging unit 1 mounted thereon. According to the present embodiment, as illustrated in FIG. 10, the imaging unit 1 is mounted near a rear bumper 21 of a vehicle 200 to take an image behind the vehicle 200. An area A in the figure represents an area captured by the imaging unit 1.

A display 7, when a user selects a parking mode, displays an image generated by the camera calibration device 100. The parking mode assists smooth parking by displaying, on the display 7, an image in the area A behind the vehicle 200 where it is difficult for the user driving the vehicle 200 to view. A predicted track of the vehicle 200 may be superimposed on the image in the area A behind the vehicle 200, for assisting smoother parking.

Also, when the user selects a camera calibration mode, the image generated by the camera calibration device 100 is displayed. The camera calibration mode, by disposing a subject or figure serving as mark in the area A behind the vehicle 200, allows the user to calibrate a mounting position of the imaging unit 1 by using an image of the mark taken by the imaging unit 1. The camera calibration mode is used when the imaging unit 1 is mounted on the vehicle 200 in a production line of the vehicle 200 or when the imaging unit 1is displaced due to vibrations of the vehicle 200 or the like. A calibration method will be described in detail below.

When a navigation mode is selected by the user, the display 7 may display a route map to a destination obtained by a navigation system. When a TV mode is selected, the display 7 may display television obtained by a TV receiver.

An image processing unit 2, by processing the electric signal output from the imaging unit 1, generates an image signal for displaying a digital image in, for example, a progressive form or an interlace form.

An image superimposing unit 3, such that a calibration marker used in calibration described below or the predicted track followed by the vehicle moving backward is superimposed as graphic data at a predetermined position on the image taken by the imaging unit 1, processes the image signal input from the image processing unit 2.

Display of the calibration marker superimposed on the image is controlled according to an instruction by a CPU (calculation unit) 4. Especially, a display position of the calibration marker is controlled by the CPU 4 via an instruction unit 5 serving as a user interface that may be operated by an operator. The instruction unit 5 has an operation unit 5 a that allows an input of an instruction to shift the display position of the calibration marker on the image.

Note that a configuration of the camera of the camera calibration device is not particularly limited and may include, for example, the imaging unit 1, the image processing unit 2, the image superimposing unit 3, the CPU 4 and an image output unit 6.

FIG. 2 illustrates an example of the operation unit 5a of the instruction unit 5 serving as the user interface. The operation unit 5a includes a start button 9 operated at the start of calibration, a shift button 10 for moving the calibration marker in vertical and horizontal directions, a position determination button 11 operated at the end of shift of the calibration marker, and an execution button 12 operated for executing calibration. However, the operation unit 5a is not limited to the example illustrated in FIG. 2 but may be, for example, a mouse, a keyboard, a joystick or a touch panel. Also, the buttons set forth above may be mechanical switches or objects displayed on the touch panel laminated on the display 7.

Referring back to FIG. 1, the image having the calibration marker superimposed thereon by the image superimposing unit 3 is converted by the image output unit 6 into the image signal in a format (for example, NTSC or the like) appropriate for display. Then, when the converted image signal is input to the display 7 serving as a display means, the image is displayed on a screen.

A calibration mark 8 is the subject or figure disposed at a predetermined distance (for example, 1 m) from a rear edge of the vehicle 200 when the vehicle 100 is accurately stopped at a predetermined parking position, and takes the shape of, for example, a rectangular plate or a white line drawn on a road. That is, when the camera is mounted at a correct angle, a positional relationship between the vehicle 200 and the calibration mark 8 is specified, thus the calibration mark 8 taken by the imaging unit1 is always displayed at a particular position in the image displayed on the display 7. When the calibration mark 8 is displayed off the particular position, calibration parameters for specifying deviation of a mounting angle of the imaging unit1 may be obtained by shifting the calibration marker to the calibration mark 8 by using the instruction unit 5.

FIG 3 is a diagram illustrating variations of a form of the calibration mark 8 imaged by the imaging unit 1 in calibration. The calibration mark 8 according to the present embodiment has two points A and B having a predetermined distance therebetween on a plane.

In an example in FIG. 3 (a), the calibration mark 8 is formed of a line connecting the two points A and B on the plane. Since the calibration object 8 has the points A and B at the ends of the line, the operator may easily recognize the calibration mark 8 displayed in the display 7. Although both ends of the mark 8 have a black dot denoting the point A or B in FIG. 3(a), these dots are not necessary and the line may be thicker for easy recognition by the operator. As illustrated in FIG. 3(b), also, the calibration mark 8 may be in the form of a frame including the points A and B at both edges thereof.

Although the calibration mark 8 according to the present embodiment may take a variety of forms, the calibration mark 8 having the form illustrated in FIG. 3(a) (the line without the dots at both ends thereof) is used as an example in the description below.

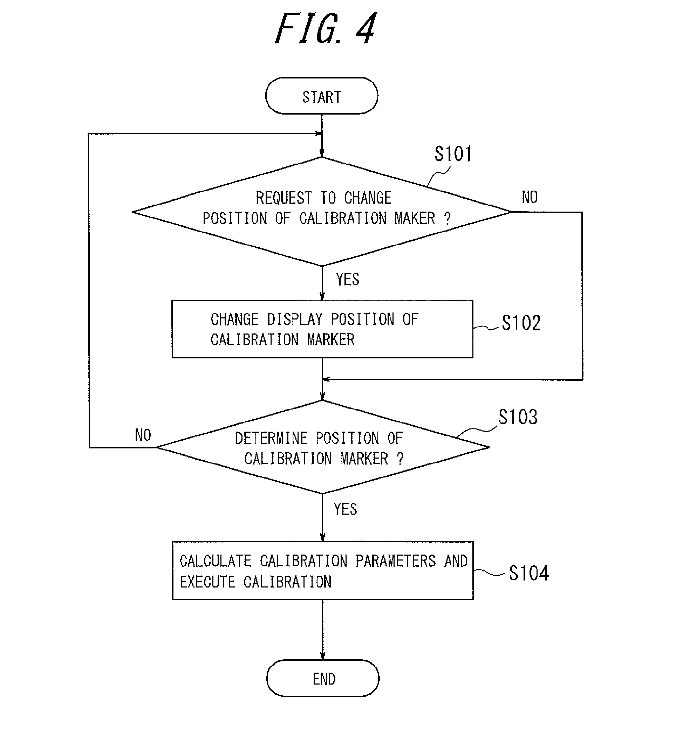

Now, control by the CPU 4 will be described in detail referring to FIG. 4. FIG. 4 is a flowchart illustrating the control by the CPU 4 in steps.

First, the CPU 4 determines whether the instruction unit 5 is requested to change the display position of the calibration marker for calibration (step S101), by detecting an operation of the start button 9 of the operation unit 5a of the instruction unit 5 by the operator.

When the operation of the start button 9 is detected, the CPU 4 then detects which one of the shift button 10 corresponding to shift in the vertical direction or in the horizontal direction is operated by the operator (step S101) and, based on the direction of the shift button operated, shifts the display position of the calibration marker (step S102). Such operation to shift the calibration marker is performed in real time by the operator viewing the display position of the calibration marker in the panel of the display 7. When there is no request at step S101 (No at step S101), the CPU 4 proceeds to step S103 described below skipping the process at step S102.

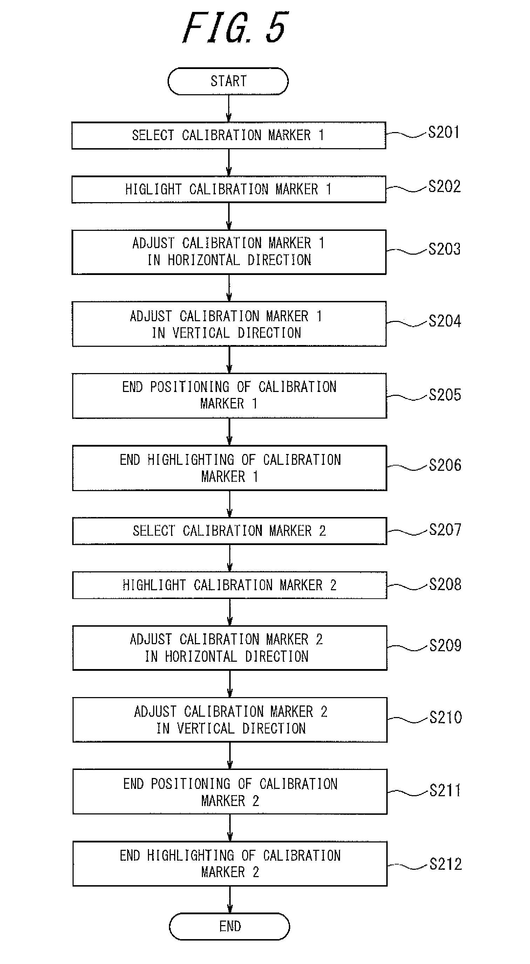

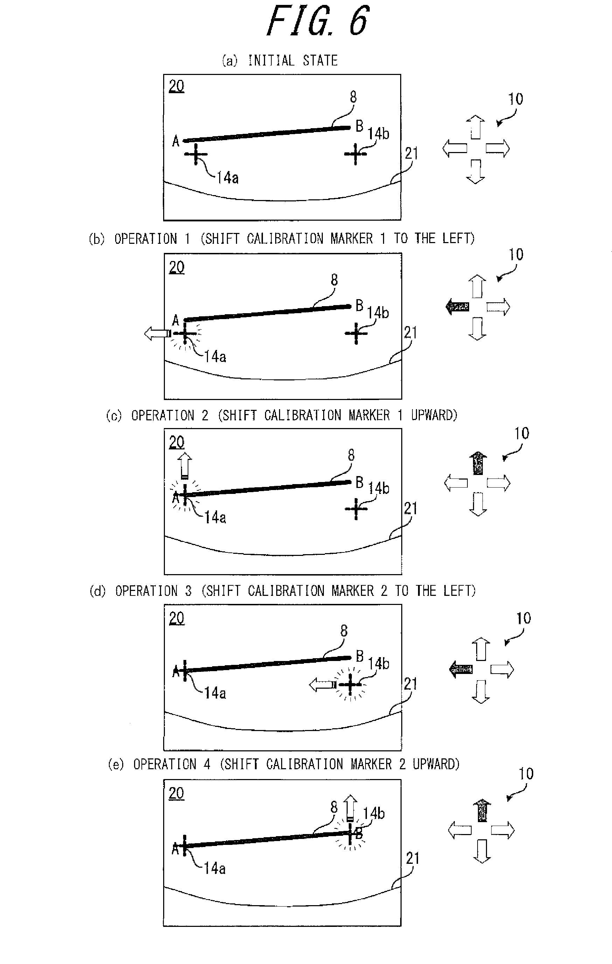

FIG. 5 is a flowchart illustrating an operation to shift the calibration marker at step S102. FIG. 6 is a diagram illustrating an example of a shift of the calibration marker by the camera calibration device 100 according to the present embodiment. Referring to FIGS. 5 and 6, the calibration using the calibration marker will be described. Preferably, the image superimposing unit 3, in order to improve operability of the user by clearly indicating calibration markers 14a and 14b shifted, highlights one of the calibration markers being shifted (selected). The calibration marker is highlighted by, for example, blinking or changing color or a thickness thereof, to allow distinguish from another calibration marker not being shifted (unselected). In the example illustrated in FIGS. 5 and 6, the calibration marker is highlighted.

FIG. 6(a) illustrates an initial state where the image (including a rear bumper 21 of the vehicle having the camera calibration device 100 mounted thereon and the calibration mark 8 provided on the road behind the vehicle) taken by the imaging unit 1, and the calibration markers 14a and 14b are displayed in a display panel 20.

The calibration markers 14a and 14b correspond to the calibration mark 8 displayed in the display 7 and the display positions of the calibration markers 14a and 14b may be separately controlled by operation of the shift button 10 of the instruction unit 5. Since the display positions of the calibration markers 14a and 14b on the image may be separately controlled, the operator may easily operate to place the calibration markers 14a and 14b to overlap the two points A and B of the calibration mark 8.

When a single pressing of the shift button 10 is made correspond to offset at 0.5 degree, the calibration markers 14a and 14b, upon a single pressing of the shift button 10 for shifting the calibration markers in the horizontal direction, are shifted by the number of pixels equivalent to a shift amount of the image when an image taking direction of the camera is directed by 0.5 degree in a pan (horizontal) direction. The same applies to a tilt (vertical) direction.

First, the operator selects the calibration marker 14a, between the calibration markers 14a and 14b, displayed on the left side in the display panel (step S201). When the calibration marker 14a is selected at step S201, the image superimposing unit 3 highlights the calibration marker 14a to be shifted, for easy distinguishing from the calibration marker 14b not to be shifted (step S202). FIGS. 6(b) and (c) illustrate a state that the calibration marker 14a is blinking (highlighted).

The operator, by operating the shift button 10 corresponding to a left direction, shifts the calibration marker 14a in the left direction as illustrated in FIG. 6(b) such that the calibration marker 14a meets a coordinate of the left end A of the calibration object 8 in the horizontal direction (step S203). Subsequently, the operator, by operating the shift button 10 corresponding to an upward direction, shifts the calibration marker 14a upward as illustrated in FIG. 6(c) such that the the calibration marker 14a meets a coordinate of the left end A in the vertical direction (step S204). When the coordinates of the left end A of the calibration mark 8 meet coordinates of the calibration marker 14a, the operator instructs to end positioning of the calibration marker 14a (step S205). The operator may instruct to end positioning by, for example, holding the shift button 10 down or pressing the shift button 10 twice (double click). Alternatively, an instruction end button is provided to the operation unit 5a for allowing the operator to operate to end positioning. Upon receiving the instruction to end positioning from the instruction unit 5, the CPU 4 controls the image superimposing unit 3 to end highlighting (step S206).

Next, the operator selects the calibration marker 14b, between the two calibration markers, displayed on the right side in the display panel (step S207). Alternatively, the CPU 4 may automatically select the calibration marker 14b upon receiving the instruction to end positioning of the calibration marker 14a from the instruction unit 5. When the calibration marker 14b is selected at step S207, the image superimposing unit 3 highlights the calibration marker 14b to be shifted, for distinguishing from the calibration marker 14a not to be shifted (step S208). FIGS. 6(d) and (e) illustrate a state that the calibration marker 14b is blinking (highlighted).

The operator, in a similar manner for shifting the calibration marker 14a described above, operates the shift button 10 corresponding to the left direction as illustrated in FIG. 6(d) such that the calibration marker 14b meets a coordinate of the right end B of the calibration mark in the horizontal direction(step S209). Subsequently, the operator, by operating the shift button 10 corresponding to the upward direction, shifts the calibration marker 14b upward as illustrated in FIG. 6(e) such that the calibration marker 14b meets a coordinate of the right end B of the calibration mark in the vertical direction (step S210). When the coordinates of the right end B of the calibration mark 8 meets coordinates of the calibration marker 14b, the operator instructs to end positioning of the calibration marker 14b (step S211). The operator may instruct to end positioning by, for example, holding the shift button 10 down or pressing the shift button 10 twice (double click). Alternatively, the instruction end button is provided to the operation unit 5a for allowing the operator to operate to end positioning. Upon receiving the instruction to end positioning from the instruction unit 5, the CPU 4 controls the image superimposing unit 3 to end highlighting (step S212).

As described above, the camera calibration device 100 according to the present embodiment may adjust the calibration markers 14a and 14b so as to overlap the two points A and B of the calibration mark 8 simply by shifting the calibration markers 14a and 14b in the vertical and horizontal directions on the image. That is, since a complex adjustment such as rotation of the calibration marker according to background arts is not necessary, repetitive adjustment of the position of the calibration marker is eliminated, thereby effectively reducing a work load imposed on the operator in operation. Also, the shift button 10 of the operation unit 5 of the instruction unit 5 may be simplified as a rotating operation is not necessary, which is excellent in terms of cost reduction.

Referring back to FIG. 4, the CPU 4 determines whether shift of the display positions of the calibration markers 14a and 14b is finished (step S103), based on whether the position determination button 11 of the operation unit 5a is operated by the operator. When the operator operates the execution button 12, calibration parameters (a roll angle, a pan angle and a tilt angle of the camera) are calculated based on the determined display positions of the calibration markers 14a and 14b, and calibration is executed (step S104). When the positions of the calibration markers 14a and 14b are not determined at step S103 (NO at step S103), the CPU returns to step S101 to repeat the process described above.

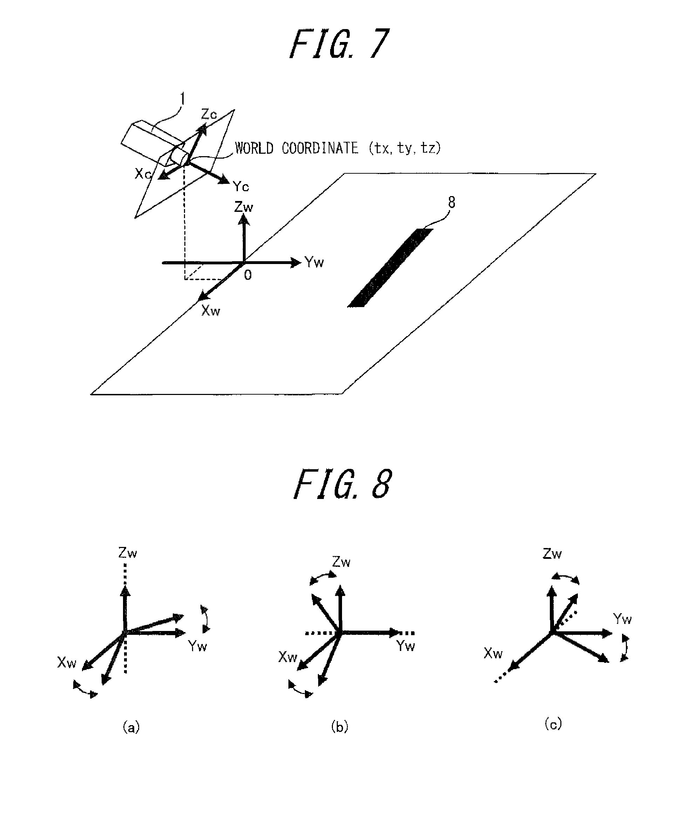

Next, a method for calculating the calibration parameters at step S104 will be described. FIG. 7 is a diagram illustrating a positional relationship between the imaging unit 1 (camera) provided to the vehicle and the calibration mark 8. The imaging unit 1 is provided at the rear part of the vehicle, and the mounting position of the imaging unit 1 is represented by a point (tx, ty, tz) in a world coordinate system (Xw, Yw, Zw) as an absolute coordinate. Although a center 0 of an edge of the rear bumper of the vehicle is set to be an origin of the world coordinate system (Xw, Yw, Zw) in an example in FIG. 7, it is needless to say that any point in the space may be set as the origin, provided that positions in the entire system may be defined unambiguously.

In the system having the position of the imaging unit 1 as the origin, a relative positional relationship may be represented by a camera coordinate system (Xc, Yc, Zc). The camera coordinate system (Xc, Yc, Zc) is represented as a relative coordinate system (a literal shift and a rotational shift in the world coordinate system) having the world coordinate (tx, ty, tz) of the imaging unit 1 as the origin. FIG. 8 is a diagram illustrating examples of a rotation in the world coordinate system (Xw, Yw, Zw), and FIGS. 8(a), (b) and (c) illustrate a rotation (pan) about an axis Zw, a rotation (roll) about an axis Yw and a rotation (tilt) about an axis Xw, respectively. When $\alpha$, $\beta$ and $\gamma$ represent a rotation angle of the pan, a rotation angle of the roll and a rotation angle of the tilt, respectively, a relationship between the camera coordinate system (Xc, Yc, Zc) and the world coordinate system (Xw, Yw, Zw) may be represented by the following Formula (1).

[Formula 1]

$$\begin{bmatrix} Xc_1 \\ Yc_1 \\ Zc_1 \\ 1 \end{bmatrix} = \begin{bmatrix} \cos\alpha & -\sin\alpha & 0 & 0 \\ \sin\alpha & \cos\alpha & 0 & 0 \\ 0 & 0 & 1 & 0 \\ 0 & 0 & 0 & 1 \end{bmatrix} \begin{bmatrix} \cos\beta & 0 & \sin\beta & 0 \\ 0 & 1 & 0 & 0 \\ -\sin\beta & 0 & \cos\beta & 0 \\ 0 & 0 & 0 & 1 \end{bmatrix} \begin{bmatrix} 1 & 0 & 0 & 0 \\ 0 & \cos\gamma & -\sin\gamma & 0 \\ 0 & \sin\gamma & \cos\gamma & 0 \\ 0 & 0 & 0 & 1 \end{bmatrix} \begin{bmatrix} 1 & 0 & 0 & -tx \\ 0 & 1 & 0 & -ty \\ 0 & 0 & 1 & -tz \\ 0 & 0 & 0 & 1 \end{bmatrix} \begin{bmatrix} Xw_1 \\ Yw_1 \\ Zw_1 \\ 1 \end{bmatrix} \quad (1)$$

Here, a relationship between an incident angle $\theta_i$ of the light of a subject on the lens of the imaging unit 1 and an image height y on the image sensor of the imaging unit 1 is defined by the following Formula (2) when, for example, a pinhole lens is employed. In Formula (2), f represents a focal length of the lens.

[Formula 2]

$$y = f \tan\theta_i \quad (2)$$

The incident angle $\theta_i$ on the lens may be calculated from the following Formula (3).

[Formula 3]

$$\theta_i = \tan^{-1} \frac{\sqrt{xc^2 + zc^2}}{yc} \quad (3)$$

Based on the image height y, on the other hand, an image coordinate system (xi, yi) is defined by the following Formulas (4), (5) and (6). Here, Xmax and Ymax represent an image size in the vertical direction and in the horizontal direction, respectively, and pix_x and pix_y represent a pixel size of the sensor in the vertical direction and in the horizontal direction, respectively. Since coordinates of the calibration points in the world coordinate system are known, when coordinates of two calibration points A and B on the image is determined by a sequential operation of the instruction unit 5 illustrated in FIG. 6, each of the pan angle, the roll angle and the tilt angle may be calculated from Formulas (1)-(6).

[Formula 4]

$$xi = X\max/2 + y\cos\phi_i / pix\_x \quad (4)$$

$$yi = Y\max/2 + y\sin\phi_i / pix\_y \quad (5)$$

$$\phi_i = \tan^{-1} \frac{zc}{xc} \quad (6)$$

After the CPU 4 calculates the calibration parameters, the imaging unit 1 outputs the image offset by an amount corresponding to the calibration parameters, or the image superimposing unit 3 sets offset for the superimposed image from the imaging unit 1 by the amount corresponding to the calibration parameters. As a result, the image superimposing unit 3, in generating the superimposed image by superimposing an image such as the predicted track or the like on the digital image generated by the image processing unit 2, superimposes the predicted track or the like offset from its superimposing position prior to calculation of the calibration parameters. Therefore, a highly accurate predicted vehicle track may be displayed in parking, for example.

The camera calibration device according to the present embodiment, as described above, without an complex operation such as repetitive fine adjustments, enables to easily adjust the display positions of the calibration markers 14a and 14b to overlap the two points A and B of the calibration mark 8 and to calculate the mounting angle (the pan angle, roll angle and tilt angle) of the imaging unit 1 (camera) for calibration. Especially, since the display positions of the calibration markers 14a and 14b may be adjusted by simply shifting the calibration markers in the vertical and horizontal directions without rotating, the work load imposed on the operator is reduced in operation and easy calibration is enabled.

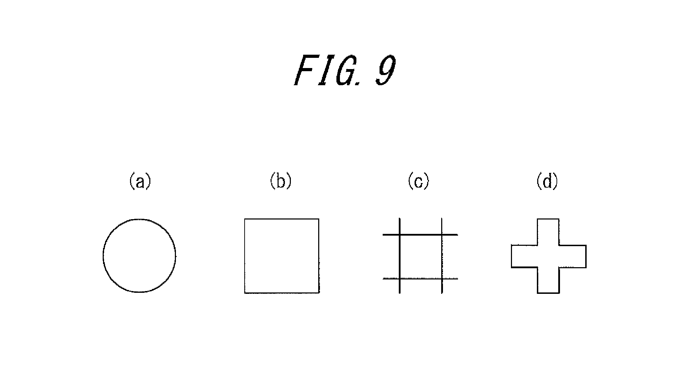

Note that it takes some time to finely adjust the positions of the calibration markers 14a and 14b to meet the ends A and B of the calibration mark 8, and also that, when the calibration markers 14a and 14b do not completely meet the ends A and B of the calibration mark 8, obtainment of the calibration parameters is not affected. Therefore, it is preferable that the calibration markers 14a and 14b are in the form of a frame surrounding a predetermined area and the CPU 4 obtains the coordinate of the positions of the calibration markers 14a and 14b when the predetermined area surrounded by the calibration markers 14a and 14b accommodate the ends A and B of the calibration mark 8. FIG. 9 is a diagram illustrating examples of the calibration marker. Each of the calibration markers illustrated in FIGS. 9(a)-(d) are shaped to surround the predetermined area.

The present invention is applicable to the camera calibration device, for calibration of a camera mounting angle on the vehicle by calculating the camera mounting angle by taking an image of the calibration mark, the camera and the camera calibration method.

Explanation of Reference Numerals

| | |
|---|---|
| 1 | Imaging Unit |
| 2 | Image Processing Unit |
| 3 | Image Superimposing Unit |
| 4 | CPU (Calculation Unit) |
| 5 | Instruction Unit |
| 5a | Operation unit |
| 6 | Image Output unit |
| 7 | Display |
| 8 | Calibration Mark |
| 9 | Start Button |
| 10 | Shift Button |
| 11 | Position Determination Button |
| 12 | Execution Button |
| 14 | Calibration Marker |
| 20 | Display Panel |
| 21 | Rear Bumper |
| 100 | Camera Calibration Device |
| 200 | Vehicle |

**Claims**

1. A camera calibration device for calibrating a camera mounting angle on a vehicle by calculating the camera mounting angle by taking an image of a calibration mark, comprising:

an imaging unit configured to take the image including the calibration mark having two separate points on a plane;
an image superimposing unit configured to process an image signal such that a calibration marker is superimposed on the image;
an instruction unit configured to instruct on a position to superimpose the calibration marker in the image; and
a calculation unit configured to calculate parameters for calibrating deviation of the camera mounting angle based on a display position of the calibration marker when the calibration marker is superimposed overlapping the two points of the calibration mark.

2. The camera calibration device according to claim 1, wherein the calibration marker is shifted in vertical and horizontal directions.

3. The camera calibration device according to claim 1, wherein two calibration markers are displayed on the image so as to correspond to two separate points of the calibration mark and display positions of the calibration markers may be separately controlled by an instruction means.

4. The camera calibration device according to claim 1, wherein the calibration marker is formed of two lines orthogonal to each other and an intersection of the two lines indicates the display position of the calibration marker.

5. The camera calibration device according to claim 1, wherein the calibration marker is in a shape surrounding a predetermined area, and
the calculation unit calculates the camera mounting angle based on the display position of the calibration marker when the calibration marker is displayed overlapping the two points of the calibration mark.

6. The camera calibration device according to claim 1, wherein the calibration mark is formed of a line connecting the two separate points.

7. The camera calibration device according to claim 1, wherein the image superimposing unit highlights the calibration marker being shifted.

8. The camera calibration device according to claim 1, wherein the image taken by the camera is output, after the calculation unit calculates the parameters, being offset by an amount corresponding to the parameters.

9. The camera calibration device according to claim 1, wherein the image superimposing unit, when superimposing a predetermined image on the image taken by the camera, sets an offset for a superimposing position by the amount corresponding to the parameters.

10. The camera calibration device according to claim 1, further comprising a display for displaying an image in which the calibration marker is superimposed on the image including the calibration mark.

11. A camera calibration device for calibrating a camera mounting angle on a vehicle by calculating the camera mounting angle by taking an image of a calibration mark, comprising:

an image superimposing unit configured to process an image signal such that a calibration marker is superimposed on the image including the calibration mark having two separate points on a plane;
an instruction unit configured to instruct on a display position of the calibration marker superimposed on the image; and
a calculation unit configured to calculate the camera mounting angle based on the display position of the calibration marker when the calibration marker is superimposed overlapping the two points of the calibration mark.

12. A camera calibration method for calibrating a camera mounting angle on a vehicle by calculating the mounting angle by taking an image of a calibration mark, comprising:

a step to take an image including the calibration mark having two separate points on a plane;
a step to superimpose a calibration marker on the image;
a step to instruct on a display position of the calibration marker superimposed on the image; and
a step to calculate the camera mounting angle based on the display position of the calibration marker superimposed overlapping the two points of the calibration mark.

13. A camera capable of calibrating a camera mounting angle on a vehicle by calculating the camera mounting angle by taking an image of a calibration mark, comprising:

an imaging unit configured to take an image including the calibration mark having two separate points on a plane;
an image superimposing unit configured to process an image signal such that a calibration marker is superimposed on the image;
an instruction reception unit configured to receive an instruction on a display position of the calibration marker superimposed on the image; and
a calculation unit configured to calculate the camera mounting angle based on the display position of the calibration marker superimposed overlapping the two points of the calibration mark.

# FIG. 1

100

```
┌─────────┐   ┌─────────────┐   ┌─────────────┐   ┌─────────────┐   ┌─────────┐
│ IMAGING │→  │    IMAGE    │→  │    IMAGE    │→  │IMAGE OUTPUT │→  │ DISPLAY │
│  UNIT   │   │ PROCESSING  │   │SUPERIMPOSING│   │    UNIT     │   │         │
│    1    │   │    UNIT     │   │    UNIT     │   │      6      │   │    7    │
└─────────┘   │      2      │   │      3      │   └─────────────┘   └─────────┘
              └─────────────┘   └─────────────┘
                                       ↑   4
                                ┌─────────┐     ┌─────────────┐
                                │   CPU   │ ←   │ INSTRUCTION │
                                │         │     │    UNIT     │  5
                                └─────────┘     └─────────────┘
```

# FIG. 2

5a

```
┌───────────────────────────────────────────┐
│                                             │
│            ⇧                                │
│                    10      ┌───────────┐    │
│                            │   START   │  9 │
│         ⇦      ⇨           └───────────┘    │
│                            ┌───────────┐    │
│            ⇩               │ DETERMINE │ 11 │
│                            └───────────┘    │
│                            ┌───────────┐    │
│                            │  EXECUTE  │ 12 │
│                            └───────────┘    │
│                                             │
└───────────────────────────────────────────┘
```

# FIG. 3

(a)                                           8

A ●━━━━━━━━━━━━━━━━━━━━━● B

(b)                                           8

┌─────────────────────────────┐
│ ● A                     B ●  │
└─────────────────────────────┘

# FIG. 4

START

S101
REQUEST TO CHANGE
POSITION OF CALIBRATION MAKER ?
NO

YES

CHANGE DISPLAY POSITION OF
CALIBRATION MARKER
S102

S103
NO
DETERMINE POSITION OF
CALIBRATION MARKER ?

YES

CALCULATE CALIBRATION PARAMETERS AND
EXECUTE CALIBRATION
S104

END

# FIG. 5

```
        ( START )
            │
            ▼
┌──────────────────────────────┐
│  SELECT CALIBRATION MARKER 1 │────S201
└──────────────────────────────┘
            │
            ▼
┌──────────────────────────────┐
│ HIGLIGHT CALIBRATION MARKER 1│────S202
└──────────────────────────────┘
            │
            ▼
┌──────────────────────────────┐
│   ADJUST CALIBRATION MARKER 1│────S203
│     IN HORIZONTAL DIRECTION  │
└──────────────────────────────┘
            │
            ▼
┌──────────────────────────────┐
│   ADJUST CALIBRATION MARKER 1│────S204
│     IN VERTICAL DIRECTION    │
└──────────────────────────────┘
            │
            ▼
┌──────────────────────────────┐
│  END POSITIONING OF CALIBRATION│──S205
│           MARKER 1           │
└──────────────────────────────┘
            │
            ▼
┌──────────────────────────────┐
│  END HIGHLIGHTING OF CALIBRATION│─S206
│           MARKER 1           │
└──────────────────────────────┘
            │
            ▼
┌──────────────────────────────┐
│  SELECT CALIBRATION MARKER 2 │────S207
└──────────────────────────────┘
            │
            ▼
┌──────────────────────────────┐
│ HIGHLIGHT CALIBRATION MARKER 2│───S208
└──────────────────────────────┘
            │
            ▼
┌──────────────────────────────┐
│   ADJUST CALIBRATION MARKER 2│────S209
│     IN HORIZONTAL DIRECTION  │
└──────────────────────────────┘
            │
            ▼
┌──────────────────────────────┐
│   ADJUST CALIBRATION MARKER 2│────S210
│     IN VERTICAL DIRECTION    │
└──────────────────────────────┘
            │
            ▼
┌──────────────────────────────┐
│  END POSITIONING OF CALIBRATION│──S211
│           MARKER 2           │
└──────────────────────────────┘
            │
            ▼
┌──────────────────────────────┐
│  END HIGHLIGHTING OF CALIBRATION│─S212
│           MARKER 2           │
└──────────────────────────────┘
            │
            ▼
         ( END )
```

# FIG. 6

(a) INITIAL STATE

(b) OPERATION 1 (SHIFT CALIBRATION MARKER 1 TO THE LEFT)

(c) OPERATION 2 (SHIFT CALIBRATION MARKER 1 UPWARD)

(d) OPERATION 3 (SHIFT CALIBRATION MARKER 2 TO THE LEFT)

(e) OPERATION 4 (SHIFT CALIBRATION MARKER 2 UPWARD)

13

## FIG. 7

## FIG. 8

(a)                    (b)                    (c)

# *FIG. 9*

(a)　　　　(b)　　　　(c)　　　　(d)

# FIG. 10

## INTERNATIONAL SEARCH REPORT

| | International application No. |
|---|---|
| | PCT/JP2012/005853 |

**A.  CLASSIFICATION OF SUBJECT MATTER**
*H04N5/225*(2006.01)i, *B60R1/00*(2006.01)i, *B60R11/04*(2006.01)i, *H04N7/18*
(2006.01)i, *H04N17/00*(2006.01)i

According to International Patent Classification (IPC) or to both national classification and IPC

**B.  FIELDS SEARCHED**

Minimum documentation searched (classification system followed by classification symbols)
H04N5/225, B60R1/00, B60R11/04, H04N7/18, H04N17/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 2004-200819 A  (Clarion Co., Ltd.),<br>15 July 2004 (15.07.2004),<br>paragraphs [0016] to [0023], [0029]; fig. 1 to 5<br>(Family: none) | 1-4,6-13<br>5 |
| Y | JP 2001-245326 A  (Aisin Seiki Co., Ltd.),<br>07 September 2001 (07.09.2001),<br>paragraphs [0034] to [0045]; fig. 3, 6 to 8<br>& US 2001/0006554 A1 | 5 |

☐  Further documents are listed in the continuation of Box C.        ☐  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>28 November, 2012 (28.11.12) | Date of mailing of the international search report<br>11 December, 2012 (11.12.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/005853 |

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
        See extra sheet.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**          ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/005853

Continuation of Box No.III of continuation of first sheet(2)

Document 1: JP 2004-200819 A (Clarion Co., Ltd.), 15 July 2004 (15.07.2004), paragraphs [0016] to [0023], [0029]; fig. 1 to 5 (Family: none)

Document 1 has disclosed a calibration apparatus that calibrates, by photographing reference markers, a disposition error of a camera that is provided in a vehicle, said calibration apparatus having: a feature wherein two point markers each of which has line segments intersecting in a circle are disposed by being superimposed on a picked up image that includes two reference markers, a point marker selected from the point markers is moved by operations of a joystick, disposition information of the camera is calculated on the basis of coordinates of the point marker, said coordinates being within a display screen when the point marker is displayed to be superimposed on the reference marker, and the calculated disposition information is used for the purpose of calibration at the time of performing superimposed display by superimposing a predicted traveling track on the picked up image obtained from the camera; and a feature wherein the two reference markers having a bar shape can be used.

Therefore, the inventions of claims 1-4 and 6-13 have no special technical feature.

As a result of judging special technical features with respect to claims dependent on claim 1 and claims 11-13, it is considered that two inventions linked by respective special technical features indicated below are involved.

Meanwhile, the inventions of claims 1-4 and 6-13 having no special technical feature are classified into invention 1.

(Invention 1) the inventions of claims 1-4 and 6-13

The inventions of claims 1-4 and 6-13 have no special technical feature.

(Invention 2) the invention of claim 5

A feature wherein, as a calibration marker, a shape that surrounds a region of a predetermined area is used, and parameters for calibrating deviation of a camera attaching angle are calculated on the basis of a display position of the calibration marker when the calibration marker is superimposingly disposed such that the calibration marker includes two points of calibration index.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011200005 A
- JP 2012039417 A
- JP 2001245326 A